Europäisches Patentamt

(19) European Patent Office

Office européen des brevets

(11) Publication number: **0 212 697 B1**

## (12) EUROPEAN PATENT SPECIFICATION

(45) Date of publication of patent specification: **02.01.92**

(51) Int. Cl.⁵: **G11B 7/08**, G11B 21/02, G11B 33/02, H02K 41/035, F16C 29/02

(21) Application number: **86201158.2**

(22) Date of filing: **02.07.86**

(54) **Device for guiding a slide, and electrodynamic apparatus comprising said device.**

(30) Priority: **11.07.85 NL 8501991**

(43) Date of publication of application:
**04.03.87 Bulletin 87/10**

(45) Publication of the grant of the patent:
**02.01.92 Bulletin 92/01**

(84) Designated Contracting States:
**CH DE FR GB LI NL**

(56) References cited:
**EP-A- 0 011 149       EP-A- 0 112 595**
**DE-A- 2 738 602       DE-A- 3 123 441**
**DE-A- 3 424 029       NL-A- 8 300 418**
**US-A- 4 441 130**

**IBM TECHNICAL DISCLOSURE BULLETIN, vol. 26, no. 11, April 1984, pages 6067,6068, New York, US; J.M. PETROVICK: "Mechanical parts travelling along dual parallel shafts"**

(73) Proprietor: **N.V. Philips' Gloeilampenfabrieken**
**Groenewoudseweg 1**
**NL-5621 BA Eindhoven(NL)**

(72) Inventor: **Faber, Johannes Wilhelmus**
**c/o INT. OCTROOIBUREAU B.V. Prof. Holst-laan 6**
**NL-5656 AA Eindhoven(NL)**
Inventor: **Janssen, Peter Johannes Michiel**
**c/o INT. OCTROOIBUREAU B.V. Prof. Holst-laan 6**
**NL-5656 AA Eindhoven(NL)**

(74) Representative: **Schrijnemaekers, Hubert Joannes Maria et al**
**Internationaal Octrooibureau B.V. Prof. Hol-stlaan 6**
**NL-5656 AA Eindhoven(NL)**

## Description

The invention relates to a device for translating a slide, which device comprises a frame and a rectilinear guide means for the slide, the rectilinear guide means comprising parallel first and second guide rods and first bearing means and second bearing means, each bearing means cooperating with a respective guide rod to guide the slide relative to the frame in a rectilinear path along a first axis (X) of an orthogonal triaxial system comprising said axis and to support the slide with regard to two further axes (Y, Z) of which one (Z) is directed perpendicular to a plane going through said rods, said rods extending at least substantially along said first axis (X) and said first and second bearing means comprising bearing sleeves.

Such a device is disclosed in, for example, NL-A 8204981 (=EP-A-112595) The known device is employed in an electrodynamic apparatus for translating an objective along a radial path relative to the disc which rotates about an axis of rotation. The objective is arranged on a slide which can be translated relative to the frame along said radial path. The rectilinear guide means comprises two parallel guide rods of circular cross-section which are secured to the frame and four conventional bearing sleeves which are secured to the frame and which cooperate pairwise with the guide rods. The bearing sleeves comprise cylindrical bearing members which concentrically surround the guide rods in such a way that a specific clearance exists between the guide rods and the bearing members. The slide is driven by two permanent-magnetic stator magnets which extend parallel to said path and which are secured to the frame, and two drive coils which are connected to the slide and which can be translated in the magnetic field produced by the stator magnets.

A drawback of the known device is that the rectilinear guide means for the slide is susceptible to alignment errors of the guide rods, i.e. even a slight deviation in the parallel arrangement of the guide rods gives rise to additional friction in the bearing means, which is liable to give rise to stick-slip effects and which may even cause jamming of the slide. Therefore, it is necessary that during manufacture of the known device accurately machined mounting faces are formed on the frame in order to ensure an exact positioning of the guide rods when these are mounted. An additional disadvantage is that the intricate mounting of the guide rods results in a higher cost of the rectilinear guide means and hence a higher cost of the device. Further, it is to be noted that these disadvantages of the known device become even more serious in view of the general trend, towards and the consequent progress in miniaturisation.

It is an object of the invention to provide a device of the kind defined in the opening paragraph which ensures an accurate and reliable rectilinear guidance for the slide in a simple and cheap way and which is less susceptibel to alignment errors.

A first version of the device in accordance with the invention is characterized in that the first bearing means comprises a first bearing sleeve and a second bearing sleeve through which the first guide rod extends, which sleeves being shaped to cooperate with the first guide rod in such a way that the first guide rod and the first bearing sleeve together form a first support of the slide in the directions of said two further axes (Y, Z) and the first guide rod and the second bearing sleeve together form a second support of said slide only in the direction of axis (Z) of said orthogonal triaxial system, and the second bearing means comprises a bearing sleeve through which the second guide rod extends, which sleeve being shaped to cooperate with the second guide rod in such a way that the second guide rod and the bearing sleeve of the second bearing means together form a further support of the slide in either direction of said two further axes (Y, Z), the sleeve of the second bearing means being spaced from the first bearing sleeve of the first bearing means, viewed along the rectilinear path of the slide.

The second bearing means may comprise only one bearing sleeve, which sleeve, viewed along the rectilinear path of the slide is spaced from the first bearing sleeve of the first bearing means. These two bearing sleeves, which may be identical to each other, may be constructed as bearing sleeves which are known per se and may be arranged concentrically around the first guide rod and the second guide rod respectively with a specific clearance. Thus, this device provides a comparatively large effective bearing surface, which has the advantage that the weight of the slide and any further mass carried by the slide is distributed over a larger bearing area. This minimizes the inevitable friction in the bearing sleeves, which obviously yields an improved bearing construction. Moreover, the minimal bearing friction results in minimal wear, so that the slide movement remains accurate even after a long period of use.

A second version of the device in accordance with the invention is characterized in that the first bearing means comprises a first bearing sleeve and a second bearing sleeve through which the first guide rod extends, which sleeves being shaped to cooperate with the first guide rod in such a way that the first guide rod and the first bearing sleeve together form a first support of the slide in the directions of said two further axes (Y, Z) and the first guide rod and the second bearing sleeve together form a second support of said slide only in the direction of the axis (Z) of said orthogonal triaxial system, and the second bearing means comprises first and second bearing sleeves through which the second guide rod extends and which cooperate with this rod in such a way that the second guide rod and the first bearing sleeve of the second bearing means together support the slide in the direction of the axis (Y) and the second guide rod and the other bearing sleeve of the second bearing means together support the slide in the direction of the axis (Z), the second bearing sleeve of the second bearing means being spaced from the second bearing sleeve of the first bearing means viewed in the direction of the rectilinear path of the slide.

The two second bearing sleeves may be identical to each other. This device has the advantage that the friction is distributed substantially uniformly between the two guide rods, which is beneficial for a smooth movement of the slide.

The device in accordance with the invention is very suitable for use in constructions in which the slide should be capable of rapidly performing accurately define displacements. The device may be used in, for example, optical data-storage equipment, in optical video and audio equipment, and in mechanical precision constructions of other kinds, for example in measuring equipment.

It has been found that the dynamic bearing friction in the bearing means of the device in accordance with the invention is very low, so that the slide can perform rapid rectilinear movements without producing annoying vibrations in the device. Moreover, as a result of the use of the special bearing means the rectilinear guide means are readily capable of compensating for an out-of-parallel position of the guide rods.

It is to be noted that from DE-A 34 24 029 a magnetic disc memory apparatus is known, which comprises a carriage, a pair of rod shaped parallel guide members and bearing means between the carriage and the guide members. In order to compensate a slight error of parallel alignment of the guide members, the apparatus further comprises compensating means in the form of at least one elastic member between the carriage and the bearing means. A deviation of the exact positioning of the guide members is absorbed by elastic deformation of the elastic member. The device in accordance with the invention needs no additional compensating members.

It is further to be noted that in IBM Technical Disclosure Bulletin, Vol. 26, No. 11, April 1984, p. 6067, 6068 a bearing construction is shown, which is provided with two guide rods and one single slider member having two slider holes. In order to obtain a low-friction sliding motion the two slider holes are enlarged horizontally and vertically, respectively. This known bearing construction is hardly related to the bearing in the device in accordance with the invention.

An embodiment comprising a minimum number of separate parts is characterized in that the bearing sleeves are formed integrally with the slide as a single injection-moulded product.

The invention also relates to an electrodynamic apparatus for translating an objective having an optical axis along a radial path relative to a disc which rotates about an axis of rotation, which apparatus comprises a stationary first magnetic means and a translatable second magnetic means which cooperates magnetically with the first magnetic means. Such an apparatus is known from the afore-mentioned Netherlands Patent Application 8204981 and has already been described in the foregoing.

It is a further object of the invention to provide an electrodynamic apparatus of the kind defined in the foregoing which is of a simple construction, enabling the objective to be moved along said radial path more rapidly and smoothly than in the known electrodynamic apparatus.

To this end the electrodynamic apparatus in accordance with the invention is characterized in that it comprises a device according to the invention for translating a slide, on which the objective is arranged in such a manner that the axis (Z) of the orthogonal triaxial system of the device extends parallel to the optical axis of the objective, the origin of said system being on the slide.

Embodiments of the invention will now be described in more detail, by way of example, with reference to the accompanying drawings, in which

Fig. 1 is a schematic plan view of a symmetrically constructed electrodynamic apparatus in accordance with the invention,

Fig. 2 is a longitudinal sectional view taken on the line II-II in Fig. 1,

Fig. 3 is a longitudinal sectional view of the slide of the electrodynamic apparatus shown in Fig. 1, Fig. 3 being taken on the line III-III in Fig. 1,

Fig. 4A is a sectional view taken on the line IVA-IVA in Fig. 1, part of the device being omitted,

Fig. 4B is a sectional view taken on the line IVB-IVB in Fig. 1, part of the device being omitted,

Fig. 5A is a sectional view of another embodiment of the invention taken on the line VA-VA in Fig. 1, and

Fig. 5B is a sectional view of the latter embodiment taken on the line VB-VB in Fig. 1.

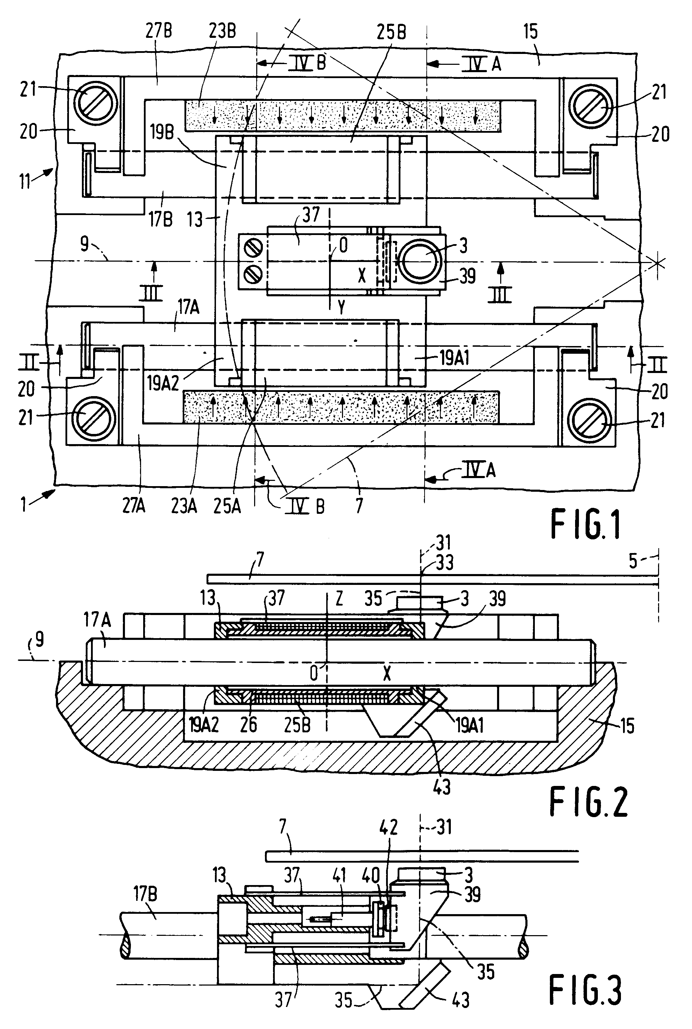

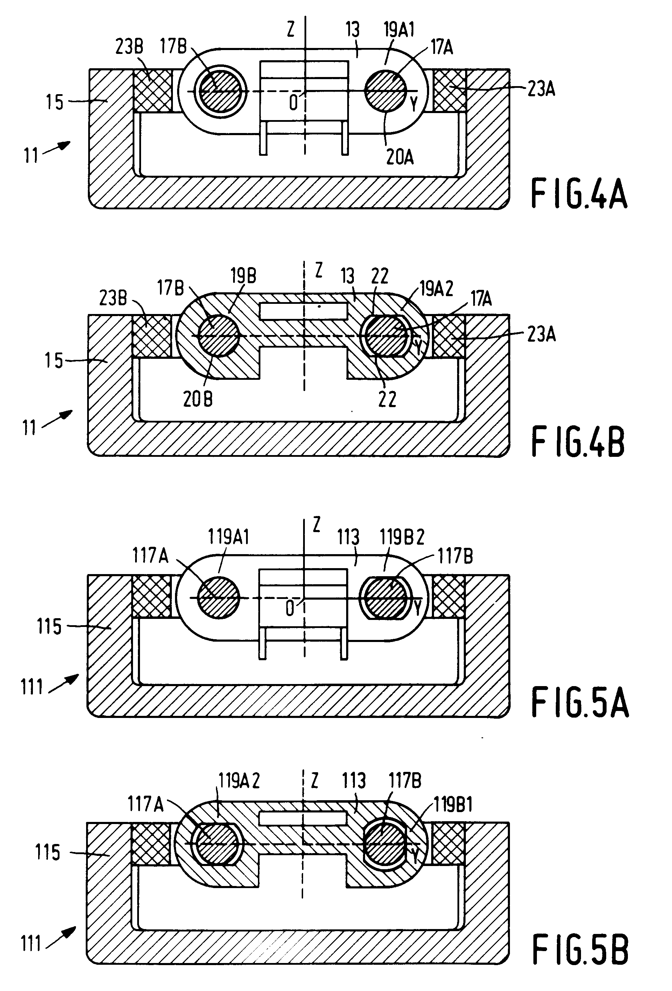

The electrodynamic apparatus 1 shown in Figs. 1, 2 and 3 serves for translating an objective 3 along a radial path 9 relative to an optical disc 7 which rotates about an axis of rotation 5. The electrodynamic apparatus 1 comprises a device 11 in accordance with the invention, for translating a slide 13 carrying the objective 3. The device 11 comprises a frame 15 and rectilinear guide means for the slide 13, which rectilinear guide means comprises a first guide rod 17A of circular cross-section and a second guide-rod 17B of circular cross-section which extends parallel to the first guide rod and first bearing means and second bearing means which cooperate with the first guide rod and the second guide rod. The first bearing means comprises two bearing sleeves which are arranged on the slide 13 and which are slidable along the first guide rod 17A, namely a first bearing sleeve 19A1 and a second bearing sleeve 19A2. In the present embodiment the second bearing means comprises only one bearing sleeve 19B, which is integral with the slide 13 and is slidable along the second guide rod 17B. The bearing sleeves 19A1, 19A2 and 19B will be described in more detail with reference to Figs. 4A and 4B.

The ferromagnetic guide rods 17A and 17B are secured to the frame 15 by means of blade springs 20 and screws 21. The frame 15 further carries two permanent stator magnets 23A and 23B which extend parallel to the guide rods 17A and 17B and which are magnetized in a direction transverse to these rods, which direction of magnetization is indicated by means of arrows in Fig. 1. Two translatable drive coils 25A and 25B of an electrically conductive material are movable in the magnetic field of the stator magnets. The drive coils 25A and 25B are wound on coil formers 26, which are arranged around the guide rods 17A and 17B respectively with ample clearance and which are secured to the slide 13. The magnets 23A and 23B are secured to a stator yoke 27A and 27B respectively of a ferromagnetic material.

The objective 3 is movable along its optical axis 31 to enable the movements of the disc 7 to be followed by means of a read spot 33 projected by a radiation beam 35 emitted by a suitable radiation source. The objective 3 is arranged on a mounting 39 which is supported on the slide 13 by means of blade springs 37 secured to the upper side and the lower side of the slide (see also Fig. 3). The mounting 39 with the objective 3 is movable to a limited extent parallel to the optical axis 31 and is electromagnetically drivable by means of an actuator coil 40. This coil is mounted on a coil former 41 on the slide 13 and cooperates with an actuator magnet 42 which is secured to the mounting 39. A mirror 43 is arranged underneath the slide 13 to reflect the radiation beam 35 emitted by the radiation source, not shown, towards the objective 3.

In order to explain the construction and the operation of the rectilinear guide maens of the device 11 in accordance with the invention, the drawing shows an orthogonal X-Y-Z triaxial system whose origin 0 is located on the slide 13. The X-axis coincides wiht the radial path of the slide 13, the Z-axis extends parallel to the optical axis 31 of the objective 3, and the Y-axis extends perpendicularly to both the X-axis and Z-axis. The rectilinear guide means serves to obtain the rectilinear movements of the slide 13 along the X-axis and also to counteract momements of the slide 13 in the directions of the Y-axis and the Z-axis.

As is apparent from Figs. 4A and 4B the slide 13 is supported in a special manner by means of the guide rods 17A and 17B and the bearing sleeves 19A1, 19A2 and 19B which cooperate with these rods. The first bearing sleeve 19A1 of the first bearing means and the bearing sleeve 19B of the second bearing means respectively each comprise a circular-cylindrical bearing surface 20A and 20B respectively which concentrially surrounds the guide rods 17A and 17B respectively. A certain clearance exists between the guide rods 17A and 17B, which have a diameter of 7mm in the present embodiment, and the bearing sleeves 19A1 and 19B respectively. This clearance can be kept comparatively small, for example of the order of 10 to 20 $\mu$m, by the use of modern and accurate manufacturing methods. The second bearing sleeve 19A2 of the first bearing means is also arranged around the guide rods 17A but only cooperates with this guide rod in directions parallel to the Z-axis of said triaxial system. For this purpose the bearing sleeve 19A2 comprises two substantially planar bearing-surface portions 22 which lie in planes extending transversely of the Z-axis of the triaxial system, a suitable clearance of the same size as stated above being provided between the bearing-surface portions 22 and the guide rod 17A. The internal surface portions of the second bearing sleeve 19A2 which are situated between the bearing-surface portions 22 are located at an ample distance from the guide rod 17A and do not contribute to the bearing function. It is to be noted that the guide rod 17B cooperates with one bearing only, namely the bearing sleeve 19B; for the remainder this guide rod 17B extends through the slide 13 with ample clearance, as is clearly visible in Fig. 4A.

With respect to device 11 it is to be noted that the slide 13 is supported in the directions of the Y-axis and the Z-axis of the triaxial system by the first bearing sleeve 19A1 and the guide rod 17A which cooperates therewith and by the bearing sleeve 19B and the guide rod 17B which cooperates therewith, and the slide 13 is supported only in the direction of the Y-axis of the triaxial system by the second bearing sleeve 19A2 and the guide rod 17A which cooperates therewith. This means that, in principle, the slide 13 can only perform translational movements along the X-axis and that the other movements in accordance with the six independent degrees of freedom which are possible in theory, namely translational movements along the Y-axis and the Z-axis and rotational movements about the three axes of the orthogonal triaxial system, are counteracted. However, as a result of the special arrangement and shape of the bearing sleeves an out-of-parallel points of the guide rods 17A and 17B is compensated for without adversely affecting the movements of the slide.

Figs. 5A and 5B show a device 111 for translating a slide 113, which may serve as an alternative to the device 11 of the electrodynamic apparatus 1 in Fig. 1. The device 111 comprises a frame 115 to which a first guide rod 117A and a second guide rod 117B are secured parallel to one another. The first guide rod 117A cooperates with a first bearing sleeve 119A1 and a second bearing sleeve 119A2 of a first bearing means and the second guide rod 117B cooperates with a first bearing sleeve 119B1 and a second bearing sleeve 119B2 of a second bearing means. The two second bearings means 119A2 and 119B2 are identical to each other and, viewed in the direction of the X-axis of the triaxial system, they are situated on the slide 113 at a distance from each other. The second bearing sleeves 119A2 and 119B2 together with the guide rods 117A and 117B respectively support the slide 113 only in the direction of the Z-axis of the triaxial system. However, the first bearing sleeve 119B1 together with the guide rod 117B support the slide 113 only in the direction of the Y-axis of the triaxial system, whilst the second bearing sleeve 119A2 together with the guide rod 117A support the slide 113 in the mutually perpendicular directions of the Y-axis and the Z-axis. This device 11 in accordance with the invention also has the aforementioned advantages, so that these will not be described.

In the present embodiments the bearing sleeves are integral with the slide and are injection-moulded from a plastics together with the slide. In this respect satisfactory results have been obtained with phenolformaldehyde loaded with glass and graphite. For the guide rods a ferromagnetic steel may be selected, whilst the rods may be provided with a nickel-teflon layer or a hard-chromium plating in order to prevent corrosion.

Obviously, the socpe of the invention is not limited to the devices for translating a slide in the embodiments described herein. For example, the divice need not necessarily be combined with an electrodynamic apparatus.

## Claims

1. A device for translating a slide (13), which device comprises a frame and a rectilinear guide means for the slide, the rectilinear guide means comprising parallel first and second guide rods (17A, 17B) and first bearing means and second bearing means, each bearing means cooperating with a respective guide rod to guide the slide relative to the frame in a rectilinear path along a first axis (X) of an orthogonal triaxial system comprising said axis and to support the slide with regard to two further axes (Y, Z) of which one (Z) is directed perpendicular to a plane going through said rods, said rods extending at least substantially along said first axis (X) and said first and second bearing means comprising bearing sleeves, characterized in that the first bearing means comprises a first bearing sleeve (19A1) and a second bearing sleeve (19A2) through which the first guide rod (17A) extends, which sleeves being shaped to cooperate with the first guide rod in such a way that the first guide rod and the first bearing sleeve together form a first support of the slide in the directions of said two further axes (Y, Z) and the first guide rod and the second bearing sleeve together form a second support of said slide only in the direction of axis (Z) of said orthogonal triaxial system, and the second bearing means comprises a bearing sleeve (19B) through which the second guide rod (17B) extends, which sleeve being shaped to cooperate with the second guide rod in such a way that the second guide rod and the bearing sleeve of the second bearing means together form a further support of the slide in either direction of said two further axes (Y, Z), the sleeve of the second bearing means being spaced from the first bearing sleeve (19A1) of the first bearing means, viewed along the rectilinear path of the slide.

2. A device for translating a slide (13), which device comprises a frame and a rectilinear guide means for the slide, the rectilinear guide means comprising parallel first and second guide rods (117A, 117B) and first bearing means and second bearing means, each bearing means cooperating with a respective guide rod to guide the slide relative to the frame in a rectilinear path along a first axis (X) of an orthogonal triaxial system comprising said axis and to support the slide with regard to two further axes (Y, Z) of which one (Z) is directed perpendicular to a plane going through said rods, said rods extending at least substantially along said first axis (X) and said first and second bearing means comprising bearing sleeves, characterized in that the first bearing means comprises a first bearing sleeve (119A1) and a second bearing sleeve (119A2) through which the first guide rod (117A) extends, which sleeves being shaped to cooperate with the first guide rod in such a way that the first guide rod and the first bearing sleeve together form a first support of the slide in the directions of said two further axes (Y, Z) and the first guide rod and the second bearing sleeve together form a second support of said slide only in the direction of the axis (Z) of said orthogonal triaxial system, and the second bearing means comprises first (119B1) and second bearing sleeves (119B2) through which the second guide rod (117B) extends and which cooperate with this rod in such a way that the second guide rod and the first bearing sleeve of the second bearing means together support the slide in the direction of the axis (Y) and the second guide rod and the other bearing sleeve (119B2) of the second bearing means together support the slide in the direction of the axis (Z), the second bearing sleeve (119B2) of the second bearing means being spaced from the second bearing sleeve (119A2) of the first bearing means viewed in the direction of the rectilinear path of the slide.

3. A device as claimed in Claim 1 or 2, characterized in that the bearing sleeves (19A1, 19A2; 119A1, 119A2) are formed integrally with the slide (13) as a single injection-moulded product.

4. An electrodynamic apparatus for translating an objective (3) having an optical axis (31) along a radial path (9) relative to a disc (7) which rotates about an axis of rotation (5), which apparatus comprises a stationary first magnetic means and a translatable second magnetic means which cooperates magnetically with the first magnetic means, characterized in that the apparatus comprises a device as claimed in Claim 1 or 2 for translating a slide (13) on which the objective (3) is arranged in such a manner that the axis (Z) of the orthogonal triaxial system as defined, extends parallel to the optical axis (31) of the objective, the origin of said system being on the slide.

**Revendications**

1. Dispositif destiné à déplacer un coulisseau (13), ce dispositif comprenant un châssis et un moyen de guidage rectiligne pour le coulisseau, le moyen de guidage rectiligne comprenant une première et une seconde tige de guidage parallèles (17A, 17B) ainsi qu'un premier et un second palier, chaque palier coopérant avec une tige de guidage correspondante pour guider le coulisseau par rapport au châssis suivant un trajet rectiligne le long d'un premier axe (X) d'un système triaxal orthogonal comprenant cet axe et pour supporter le coulisseau par rapport à deux autres axes (Y, Z) dont l'un, l'axe (z), est perpendiculaire à un plan passant par les tiges, ces tiges s'étendant au moins en substance dans le sens du premier axe (X) et le premier ainsi que le second palier comprenant des douilles-paliers, caractérisé en ce que le premier palier comprend une première douille-palier (19A1) et une seconde douille-palier (19A2) à travers lesquelles s'étend la première tige de guidage (17A), ces douilles étant façonnées pour coopérer avec la première tige de guidage d'une manière telle que cette première tige de guidage et la première douille-palier forment ensemble un premier support du coulisseau dans les directions des deux autres axes (Y, Z) et la première tige de guidage ainsi que la seconde douille-palier forment ensemble un second support du coulisseau uniquement dans la direction de l'axe (Z) du système triaxial orthogonal, et le second palier comprend une douille-palier (19B) à travers laquelle s'étend la seconde tige de guidage (17B), cette douille-palier étant façonnée pour coopérer avec la seconde tige de guidage d'une manière telle que la seconde tige de guidage et la douille-palier du second palier forment ensemble un autre support du coulisseau dans l'une ou l'autre direction des deux autres axes (Y, Z), la douille-palier du second palier étant espacée de la première douille-palier (19A1) du premier palier, vu dans le sens du trajet rectiligne du coulisseau.

2. Dispositif destiné à déplacer un coulisseau (13), ce dispositif comprenant un châssis et un moyen de guidage rectiligne pour le coulisseau, le moyen de guidage rectiligne comprenant une première et une seconde tige de guidage parallèles (117A, 117B) ainsi qu'un premier et un second palier, chaque palier coopérant avec une tige de guidage correspondante pour guider le coulisseau par rapport au châssis selon un trajet rectiligne qui suit un premier axe (X) d'un système triaxal orthogonal comprenant cet axe et pour supporter le coulisseau par rapport à deux autres axes (Y, Z) dont l'un, l'axe (Z), est perpendiculaire à un plan passant par les tiges, ces tiges s'étendant au moins en substance dans le sens du premier axe (X) et le premier ainsi que le second palier comprenant des douilles-paliers, caractérisé en ce que le premier palier comprend une première douille-palier (119A1) et une seconde douille-palier (119A2) traversées par la première tige de guidage (117A), ces douilles étant façonnées pour coopérer avec la première tige de guidage d'une manière telle que cette première tige de guidage et la première douille-palier forment ensemble un premier support du coulisseau dans les directions des deux autres axes (Y, Z) et que la première tige de guidage et la seconde douille-palier forment ensemble un second support du coulisseau uniquement dans la direction de l'axe (Z) du système triaxial orthogonal, et le second palier comprend une première (119B1) et une seconde (119B2) douille-palier traversées par la seconde tige de guidage (117B) et coopérant avec cette tige d'une manière telle que la seconde tige de guidage et la première douille-palier du second palier supportent ensemble le coulisseau dans la direction de l'axe (Y) et la seconde tige de guidage ainsi que l'autre douille-palier (119B2) du second palier supportent ensemble le coulisseau dans le sens de l'axe (Z), la seconde douille-palier (119B2) du second palier étant espacée de la seconde douille-palier (119A2) du premier palier, vu dans le sens du trajet rectiligne du coulisseau.

3. Dispositif suivant la revendication 1 ou 2, caractérisé en ce que les douilles-paliers (19A1, 19A2; 119A1, 119A2) sont formées d'une seule pièce avec le coulisseau (13) en tant qu'un seul produit moulé par injection.

4. Appareil électrodynamique destiné à déplacer un objectif (3) ayant un axe optique (31) suivant un trajet radial (9) par rapport à un disque (7) qui tourne autour d'un axe de rotation (5), cet appareil comprenant un premier moyen magnétique fixe et un second moyen magnétique déplaçable qui coopère magnétiquement avec le premier moyen magnétique, caractérisé en ce qu'il comprend un dispositif suivant la revendication 1 ou 2, destiné à déplacer un coulisseau (13) sur lequel l'objectif (3) est monté d'une manière telle que l'axe (Z) du système triaxial orthogonal tel que défini plus haut s'étende parallèlement à l'axe (31) de l'objectif, l'origine du système se situant sur le coulisseau.

## Patentansprüche

1. Vorrichtung zur geradlinigen Verschiebung eines Schlittens (13), die einen Rahmen und ein geradliniges Führungsmittel für den Schlitten aufweist, wobei dieses geradlinige Führungsmittel einen ersten und einen parallelen zweiten Führungsstab (17A, 17B) sowie ein erstes und zweites Lagermittel aufweist, wobei jedes Lagermittel mit einem zugeordneten Führungsstab zusammenarbeitet zum Führen des Schlittens gegenüber dem Rahmen über eine geradlinige Strecke gemäß einer ersten Achse (X) eines orthogonalen triaxialen Systems mit der genannten Achse und zum Unterstützen des Schlittens in bezug auf die beiden anderen Achsen (Y, Z), von denen eine (Z) sich senkrecht zu einer Ebene durch die genannten Stäbe erstreckt, wobei die Stäbe sich wenigstens im wesentlichen gemäß der ersten Achse (X) erstrecken und wobei das genannte erste und zweite Lagermittel Lagerhülsen aufweisen, dadurch gekennzeichnet, daß das erste Lagermittel eine erste Lagerhülse (19A1) und eine zweite Lagerhülse (19A2) aufweist, durch die hindurch der erste Führungsstab (17A) sich erstreckt, wobei diese Hülsen derart ausgebildet sind, daß sie mit dem ersten Führungsstab derart zusammenarbeiten, daß der erste Führungsstab und die erste Lagerhülse zusammen einen ersten Träger des Schlittens bilden in der Richtung der genannten zwei weiteren Achsen (Y, Z) und der erste Führungsstab und die zweite Lagerhülse zusammen einen zweiten Träger des genannten Schlittens bilden, nur in der Richtung der Achse (Z) des genannten orthogonalen triaxialen Systems, und wobei das zweite Lagermittel eine Lagerhülse (19B) aufweist, durch die hindurch der zweite Führungsstab (17B) sich erstreckt, wobei die Hülse derart ausgebildet ist, daß sie mit dem zweiten Führungsstab derart zusammenarbeitet, daß der zweite Führungsstab und die Lagerhülse des zweiten Lagermittels zusammen einen weiteren Träger des Schlittens bilden, je in der Richtung der genannten weiteren Achsen (Y, Z), wobei die Hülse des zweiten Lagermittels, gesehen in der Richtung der geradlinigen Strecke des Schlittens, in einem Abstand von der ersten Lagerhülse (19A1) des ersten Lagermittels liegt.

2. Vorrichtung zum geradlinigen Verschieben eines Schlittens (13), die einen Rahmen und ein geradliniges Führungsmittel für den Schlitten aufweist, wobei dieses geradlinige Führungsmittel einen ersten und einen parallelen zweiten Führungsstab (117A, 117B) sowie ein erstes und ein zweites Lagermittel aufweist, wobei jedes Lagermittel mit einem zugeordneten Führungsstab zusammenarbeitet zum Führen des Schlittens gegenüber dem Rahmen über eine geradlinige Strecke gemäß einer ersten Achse (X) eines orthogonalen triaxialen Systems mit der genannten Achse und zum Unterstützen des Schlittens in bezug auf die beiden anderen Achsen (Y, Z), von denen eine (Z) sich senkrecht zu einer Ebene durch die genannten Stäbe erstreckt, wobei die Stäbe sich weningstens im wesentlichen gemäß der ersten Achse (X) erstrecken und wobei das genannte erste und zweite Lagermittel Lagerhülsen aufweisen, dadurch gekennzeichnet, daß das erste Lagermittel eine erste Lagerhülse (119A1) und eine zweite Lagerhülse (119A2) aufweist, durch die hindurch der erste Führungsstab (117A) sich erstreckt, wobei diese Hülsen derart ausgebildet sind, daß sie mit dem ersten Führungsstab derart zusammenarbeiten, daß der erste Führungsstab und die erste Lagerhülse zusammen einen ersten Träger des Schlittens bilden in der Richtung der genannten zwei weiteren Achsen (Y, Z) und der erste Führungsstab und die zweite Lagerhülse zusammen einen zweiten Träger des genannten Schlittens bilden, nur in der Richtung der Achse (Z) des genannten orthogonalen triaxialen Systems, und wobei das zweite Lagermittel eine erste (119B1) und eine zweite Lagerhülse (119B2) aufweist, durch die hindurch der zweite Führungsstab (117) sich erstreckt und die mit diesem Stab derart zusammenarbeitet, daß der zweite Führungsstab und die erste Lagerhülse des zweiten Lagermittels zusmamen den Schlitten in der Richtung der Achse (Y) unterstützen und der zweite Führungsstab und die andere Lagerhülse (119B2) des zweiten Lagermittels zusammen den Schlitten in der Richtung der Achse (Z) unterstützen, wobei die zweite Lagerhülse (119B2) des zweiten Lagermittels, in der Richtung der geradlinigen Strecke des Schlittens gesehen, in einem Abstand von der zweiten Lagerhülse (119A2) des ersten Lagermittels liegt.

3. Vorrichtung nach Anspruch 1 oder 2, dadurch gekennzeichnet, daß die Lagerhülsen (19A1, 19A2; 119A1, 119A2) mit dem Schlitten (13) als ein einheitliches Erzeugnis im Spritzgußverfahren hergestellt sind.

4. Elektrodynamisches Gerät zur geradlinigen Verschiebung eine Gegenstandes (3) mit einer optischen Achse (31) über eine radiale Strecke (9) in bezug auf eine Platte (7), die um eine Drehungsachse (5) sich dreht, wobei dieses Gerät ein ortsfestes erstes magnetisches Mittel und ein geradlinig bewegliches zweites magnetisches Mittel aufweist, das auf magnetische Weise mit dem ersten magnetischen Mittel zusammenarbeitet, dadurch gekennzeichnet, daß das Gerät eine Vorrichtung nach Anspruch 1 oder 2 zur geradlinigen Verschiebung eines Schlittens (13) aufweist, auf dem der Gegenstand (3) derart angeordnet ist, daß die Achse (Z) des definierten orthogonalen triaxialen Systems sich parallel zu der optischen Achse (31) des Gegenstandes erstreckt, wobei der Ursprung des genannten Systems auf dem Schlitten ist.

FIG.1

FIG.2

FIG.3

FIG.4A

FIG.4B

FIG.5A

FIG.5B